# EUROPEAN PATENT APPLICATION

(11) **EP 4 629 499 A1**
(43) Date of publication of application: **08.10.2025**
(21) Application number: 23962285.5
(22) Date of filing: 22.12.2023
(51) Int. Cl.: H02M 7/48

(54) **INVERTER UNIT AND GASKET FOR INVERTER UNIT**

(71) Applicant: TMEIC Corporation, Tokyo 104-0031 (JP)
(72) Inventor: TAKAHASHI, Nobuhiro, Tokyo 104-0031 (JP); KATAYAMA, Tatsuji, Tokyo 104-0031 (JP)
(74) Representative: Winter, Brandl - Partnerschaft mbB
(86) International application number: PCT/JP2023/046181
(87) International publication number: WO 2025/134366

(57) **Abstract**

An inside and an outside of an inverter unit of a power conversion apparatus according to a present embodiment are partitioned by a partition plate. The partition plate includes a round hole, and a capacitor case having a cylindrical shape passes through the round hole. A gap between an edge of the round hole of the partition plate and the capacitor case in a state of passing through the round hole is filled with a packing. The packing includes a base and a membrane. The base and the membrane are integrated. The base has an annular shape, and sandwiches the edge from a front side and a rear side when the base is attached to the round hole. The membrane extends from the base attached to the round hole toward a center of the round hole, and adheres to a peripheral surface of the capacitor case in the state of passing through the round hole.

## Description

### Technical Field

The present disclosure relates to an inverter unit of a power conversion apparatus, and an inverter unit packing.

### Background Art

An inverter unit of a power conversion apparatus includes a capacitor. A case of the capacitor generally has a cylindrical shape. PTL 1 discloses an example of an inverter unit including a capacitor having a cylindrical shape.

The inverter unit disclosed in PTL 1 includes a partition plate (housing base) partitioning an inside of the inverter unit into a main body in which a plurality of switching elements are disposed, and an air duct through which cooling air flows. The housing base includes a through hole through which a capacitor cover passes. The capacitor cover has a bottomed cylindrical shape, and is made of a silicon rubber material having elasticity. The capacitor is housed in the capacitor cover in a state of being fitted to a capacitor band and an annular metal plate. The capacitor cover includes a flange. The flange is fixed to a main body side of the housing base together with the capacitor band and the annular metal plate by fixing screws. As a result, the capacitor is fixed together with the capacitor cover to the housing base while passing through the through hole.

In the conventional technique disclosed in PTL 1, the capacitor is fixed together with the annular metal plate and the flange of the capacitor cover to the housing base while the periphery of the case is restrained by the capacitor band. By such a fixing method, a gap of the through hole provided in the housing base may be sealed with the flange of the capacitor cover, and infiltration of dust from the air duct to the main body may be prevented. However, restraint of the case by the capacitor band and the annular metal plate generates stress on the case in a case where the capacitor thermally expands during energization. The stress generated on the case may cause breakage of the case.

### Citation List

### Patent Literature

[PTL 1] JP 2012-227252 A

### Summary of the Invention

### Problems to be Solved by the Invention

The present disclosure has been made in consideration of the above-described problems. An object of the present disclosure is to provide, in a case where a case housing a capacitor penetrates through a partition plate partitioning an inside of an inverter unit, a technique for sealing a gap of the partition plate without generating stress on the case.

An inverter unit of a power conversion apparatus according to an embodiment of the present disclosure comprises a capacitor housed in a capacitor case having a cylindrical shape and a partition plate configured to partition an inside and an outside of the inverter unit, the partition plate including a round hole through which the capacitor case passes. The inverter unit comprises a packing configured to fill a gap between an edge of the round hole of the partition plate and the capacitor case in a state of passing through the round hole. The packing includes a base having an annular shape and sandwiching the edge from a front side and a rear side when the base is attached to the round hole, and a membrane extending from the base toward a center of the round hole and adhering to a peripheral surface of the capacitor case.

The inverter unit may further comprise a stud provided on a bottom of the capacitor case, and a support plate to which the stud is fixed. Also, the inverter unit may further comprise one or more switching elements, and a stacked conductor configured to connect the one or more switching elements and a terminal of the capacitor in a same plane.

An inverter unit packing according to an embodiment of the present disclosure is a packing filling a gap between an edge of a round hole of a partition plate provided in an inverter unit and a capacitor case having a cylindrical shape in a state of passing through the round hole. The inverter unit packing comprises a base configured to sandwich the edge from a front side and a rear side when the base is attached to the round hole, and a membrane integrated with the base, and configured to adhere to a peripheral surface of the capacitor case in the state of passing through the round hole when the base is attached to the round hole.

**In** the inverter unit packing, the base may be an endless belt-shaped body having an annular shape, and the membrane may be provided inside the annular shape of the base. Also, in the inverter unit packing, the base may be a belt-shaped body made of a flexible material.

### Advantageous Effects of the Invention

According to the above-described inverter unit, the gap between the capacitor case and the round hole of the partition plate is filled with the packing. The membrane of the packing has flexibility. Therefore, even in a case where the capacitor case thermally expands, the state where the membrane adheres to the peripheral surface of the capacitor case can be maintained. This prevents infiltration of dust from the outside to the inside of the inverter unit. Further, the membrane is bent with thermal expansion of the capacitor case, which prevents stress from being generated on the capacitor case.

The above-described inverter unit packing can seal the gap between the capacitor case and the round hole of the partition plate by being attached to the round hole of the partition plate. The membrane has flexibility. Therefore, even in the case where the capacitor case thermally expands, the state where the membrane adheres to the peripheral surface of the capacitor case can be maintained. This prevents infiltration of dust from the outside to the inside of the inverter unit. Further, the membrane is bent with thermal expansion of the capacitor case, which prevents stress from being generated on the capacitor case.

### Brief Description of Drawings

Fig. 1 is a perspective view of an inverter unit according to an embodiment of the present disclosure.
Fig. 2 is a perspective view of the inverter unit in a state where a cover and laminate busbar illustrated in Fig. 1 are detached.
Fig. 3 is a rear view of the inverter unit illustrated in Fig. 1.
Fig. 4 is a side view of the inverter unit illustrated in Fig. 1.
Fig. 5 is a cross-sectional view of the inverter unit taken along line A-A in Fig. 4.
Fig. 6 is a detailed view of a portion C of the inverter unit illustrated in Fig. 5.
Fig. 7 is a detailed view of a portion B of the inverter unit illustrated in Fig. 4.
Fig. 8 is a diagram illustrating a state where an inverter unit packing is attached to the inverter unit according to the embodiment of the present disclosure.
Fig. 9 is a cross-sectional view illustrating an example of a specific shape of the inverter unit packing according to the embodiment of the present disclosure.
Fig. 10 is a cross-sectional view illustrating a state where the inverter unit packing illustrated in Fig. 9 is attached to a round hole of a partition plate.
Fig. 11 is a cross-sectional view illustrating a state where the gap between the round hole of the partition plate and the capacitor case is sealed with the inverter unit packing illustrated in Fig. 9.
Fig. 12 is a cross-sectional view illustrating another example of a specific shape of the inverter unit packing according to the embodiment of the present disclosure.
Fig. 13 is a cross-sectional view illustrating a state where the inverter unit packing illustrated in Fig. 12 is attached to the round hole of the partition plate.

### Description of Embodiment

An inverter unit and a packing used for the inverter unit according to an embodiment of the present disclosure are described below with reference to drawings.

### 1. Inverter Unit

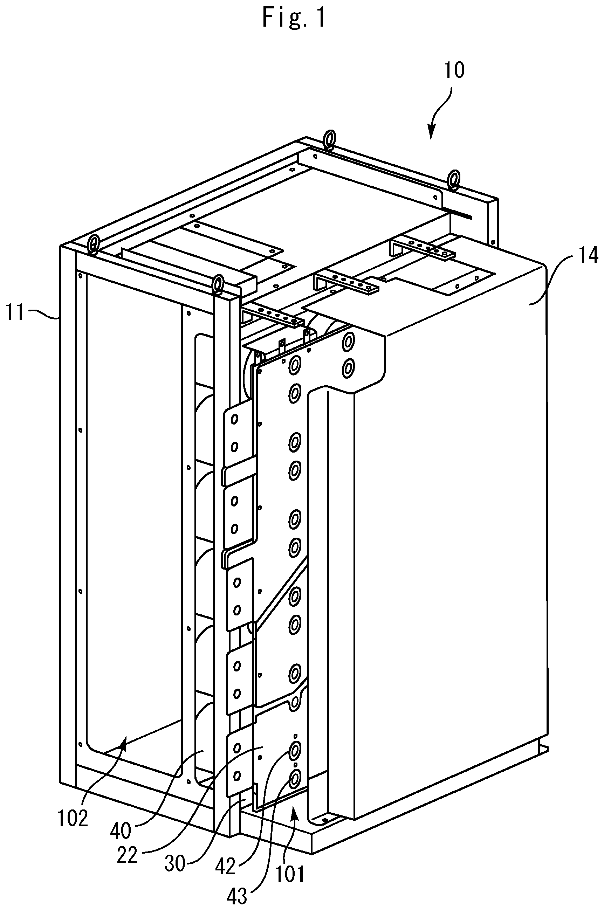

Fig. 1 is a perspective view of the inverter unit according to the present embodiment. An inverter unit 10 houses a plurality of capacitor cases 40 inside a housing 11. The capacitor cases 40 are cylindrical cases each made of aluminum, and house main bodies of respective capacitors.

An inside of the inverter unit 10 is partitioned into a circuit chamber 101 and an air duct chamber 102 by a partition plate 30. The circuit chamber 101 is a space from the partition plate 30 to a cover 14. To prevent infiltration of dust from outside, the circuit chamber 101 is sealed with an unillustrated lid. Although not illustrated in Fig. 1 because of being hidden by the cover 14, switching elements and a substrate unit that are main body portions of the inverter unit 10 are disposed in the circuit chamber 101. Further, terminals 42 and 43 of the capacitors are also disposed in the circuit chamber 101. The terminals 42 and 43 of each of the capacitors are connected to the terminals 42 and 43 of the other capacitors at the same potential by a laminate busbar 22 that is a stacked conductor, and are also connected to one or more switching elements in the same plane.

The air duct chamber 102 is a space communicating with the outside. With the partition plate 30 as a boundary, the air duct chamber 102 can be regarded as the outside of the inverter unit 10, and the circuit chamber 101 can be regarded as the inside of the inverter unit 10. A heat dissipation fin not illustrated in Fig. 1 is disposed in the air duct chamber 102. The heat dissipation fin is installed in order to dissipate heat generated from the switching elements to the outside.

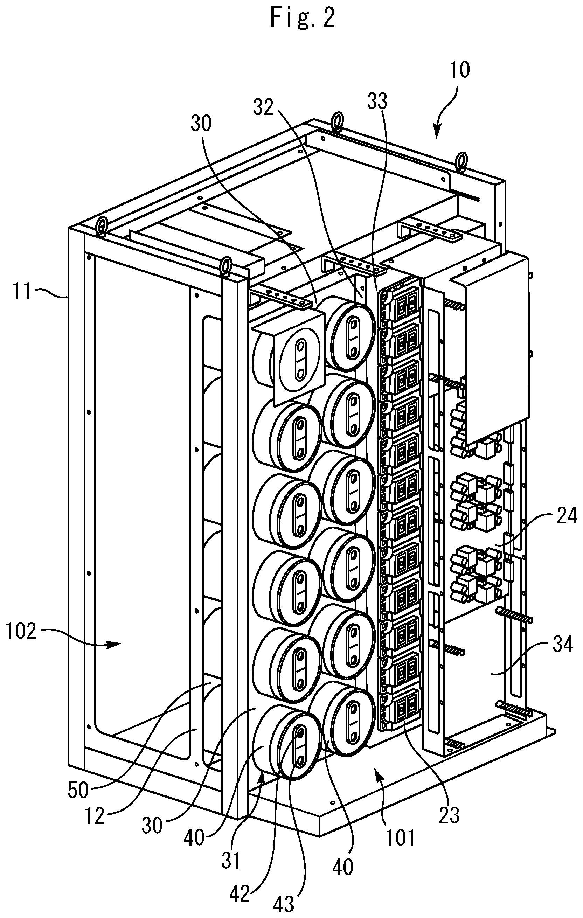

Fig. 2 is a perspective view of the inverter unit 10 in a state where the cover 14 and the laminate busbar 22 illustrated in Fig. 1 are detached. On a floor 33 connected to the partition plate 30 through a level difference 32, a plurality of switching elements 23 each including a semiconductor device such as an IGBT are disposed side by side. The capacitor cases 40 are disposed such that the terminals 42 and 43 provided on top surfaces of the capacitor cases 40 are positioned on the substantially same plane as the switching elements 23. Floors 33 and 34 of a two-layer structure including the floor 33 on which the switching elements 23 are disposed are provided in the circuit chamber 101. A substrate unit 24 is installed on the floor 34 as an upper layer.

The capacitor cases 40 are disposed side by side in two lines. The capacitor cases 40 penetrate through the partition plate 30. The partition plate 30 is a panel made of a metal or a hard resin. The partition plate 30 includes round holes 31 through which the respective capacitor cases 40 pass. Gaps between the round holes 31 and the respective capacitor cases 40 are sealed. A structure for sealing is described in detail below. Studs not illustrated in Fig. 1 are provided on bottom surfaces of the capacitor cases 40. The studs are fixed to a support plate 50 provided in the air duct chamber 102. The partition plate 30 and the support plate 50 are fixed by a frame 12.

The schematic configuration of the inverter unit 10 is described above. The detailed configuration of the inverter unit 10 is illustrated in a rear view, a side view, and a cross-sectional view.

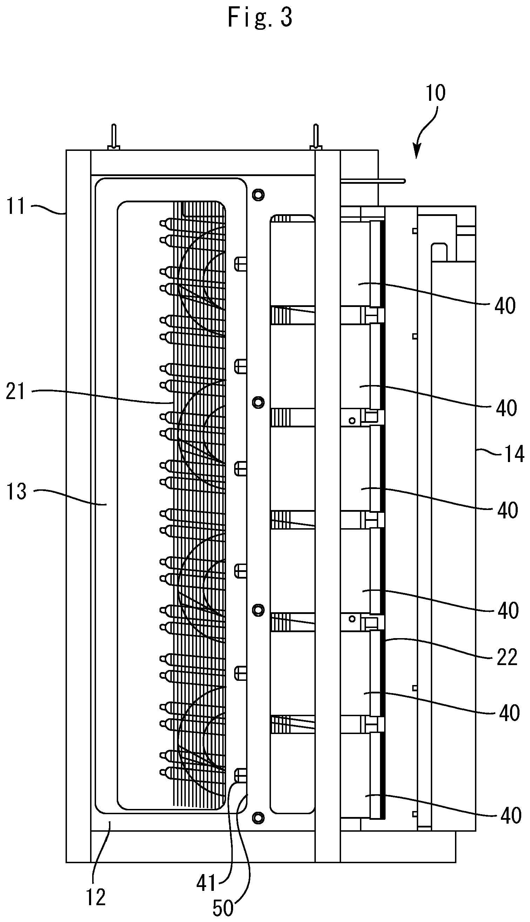

Fig. 3 is a rear view of the inverter unit 10. As illustrated in the rear view, another frame 13 is provided behind the frame 12 provided at an inlet of the air duct chamber 102. The frame 13 is positioned near a center of the air duct chamber 102. Both sides of the support plate 50 are fixed to the two frames 12 and 13. As described above, studs 41 of the capacitor cases 40 are fixed to the support plate 50. Further, a heat dissipation fin 21 is provided in a space behind the frame 13 in the air duct chamber 102.

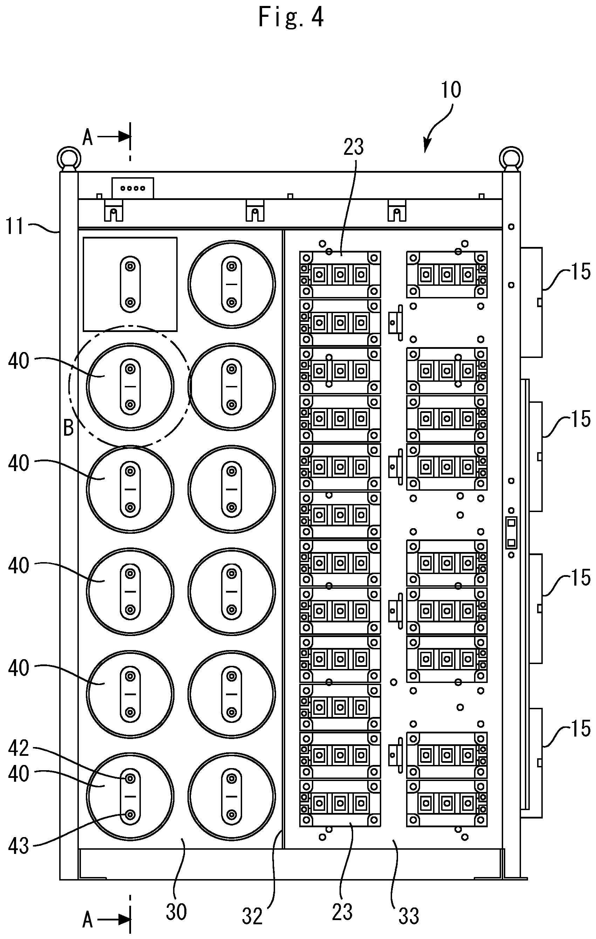

Fig. 4 is a side view of the circuit chamber 101 of the inverter unit 10. In the side view, the cover 14, the substrate unit 24, the floor 34, and the laminate busbar 22 illustrated in Fig. 1 are detached. The partition plate 30 through which the capacitor cases 40 penetrate and the floor 33 on which the switching elements 23 are disposed are connected through the level difference 32. The heat dissipation fin 21 (see Fig. 3) is attached on a rear side of the floor 33, more specifically, on a rear side of the switching elements 23. Further, a plurality of exhaust fans 15 are attached on a front surface (side surface on right side in Fig. 4) of the inverter unit 10. The exhaust fans 15 exhaust high-temperature air in the air duct chamber 102 heated by heat dissipation from the heat dissipation fin 21, to the outside.

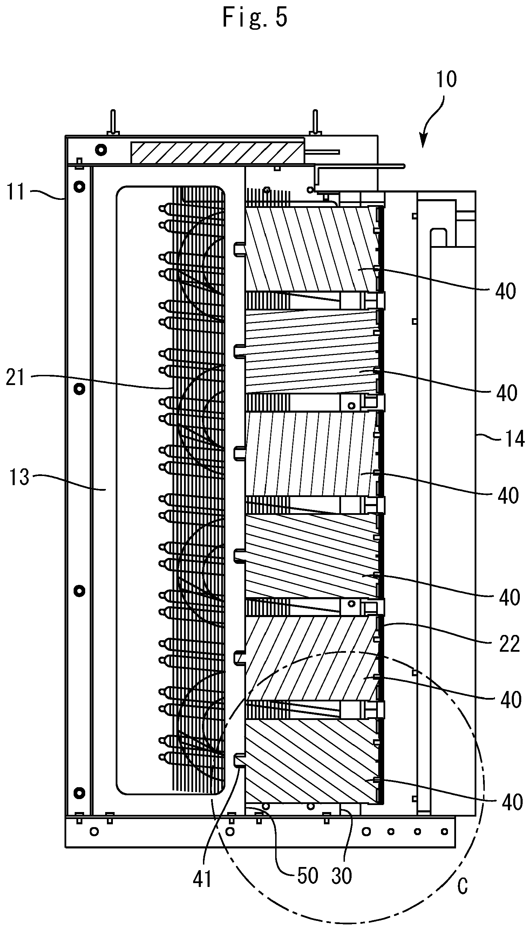

Fig. 5 is a cross-sectional view of the inverter unit 10 taken along line A-A in Fig. 4. As illustrated in the cross-sectional view, the capacitor cases 40 penetrate through the partition plate 30, and both ends of each of the capacitor cases 40 are sandwiched between the support plate 50 and the laminate busbar 22.

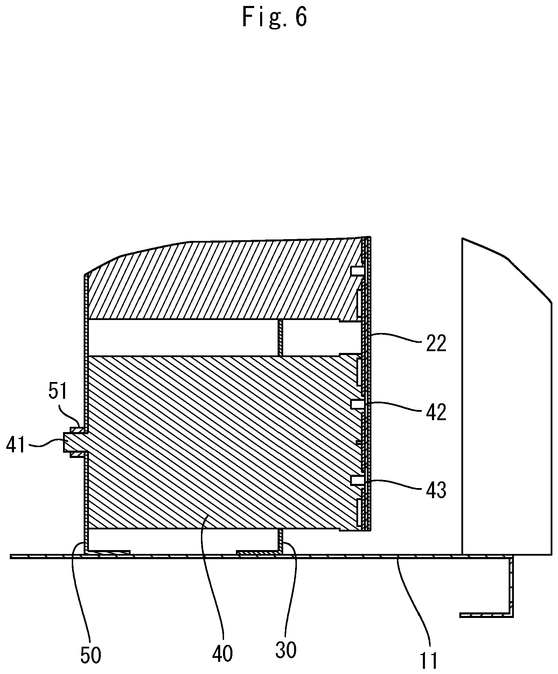

Fig. 6 is a detailed view of a portion C of the inverter unit 10 illustrated in Fig. 5. As illustrated in the detailed view of the portion C, the bottom surface of each capacitor case 40 is in contact with the support plate 50. The stud 41 provided on the bottom surface of the capacitor case 40 penetrates through the support plate 50, and is fastened to a bolt 51. The top surface of the capacitor case 40 is in contact with the laminate busbar 22. The terminals 42 and 43 provided on the top surface of the capacitor case 40 are fixed to the laminate busbar 22. As a result, both ends of the capacitor case 40 are restrained and positioned by the laminate busbar 22 and the support plate 50. On the other hand, a gap is provided between the capacitor case 40 and the partition plate 30, and the partition plate 30 does not directly restrain the capacitor case 40.

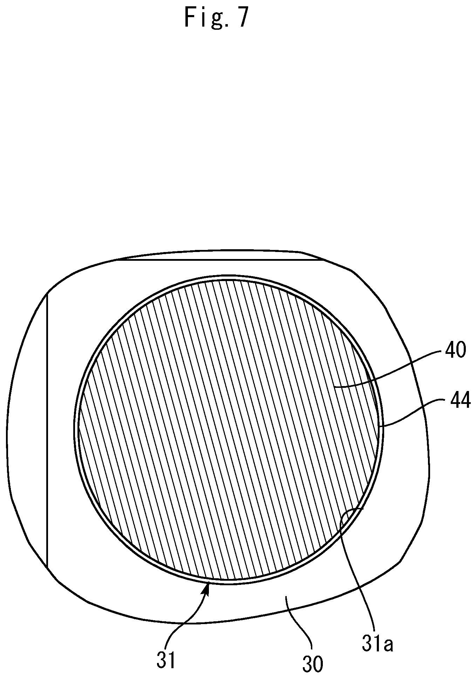

Fig. 7 is a detailed view of a portion B of the inverter unit 10 illustrated in Fig. 4. As illustrated in the detailed view of the portion B, the round hole 31 is provided on the partition plate 30. The capacitor case 40 passes through the round hole 31. A diameter of the capacitor case 40 used in the inverter unit 10 is certainly smaller than a diameter of the round hole 31. Therefore, a gap is inevitably formed between a peripheral surface 44 of the capacitor case 40 and an edge 31a of the round hole 31. To prevent infiltration of dust from the gap, a packing described below is provided in the inverter unit 10.

### 2. Inverter Unit Packing

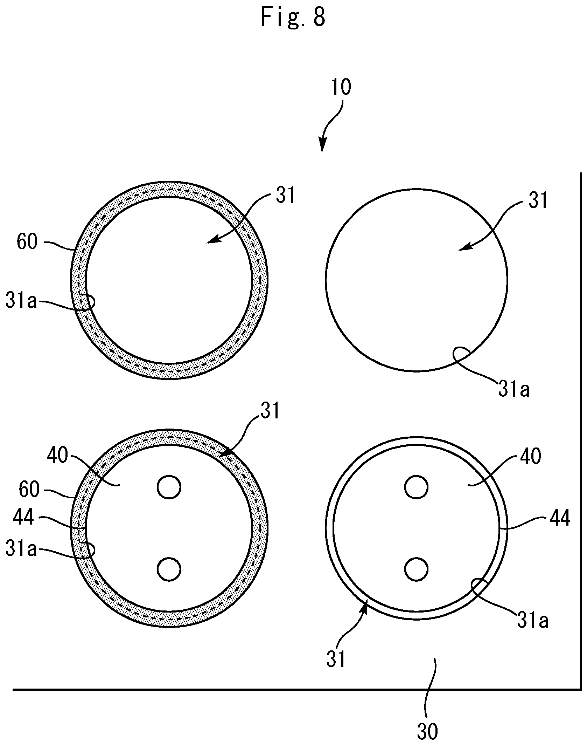

Fig. 8 is a diagram illustrating a state where the inverter unit packing is attached to the inverter unit 10 according to the present embodiment. In the example illustrated in Fig. 8, four round holes 31 are provided in the partition plate 30. The inverter unit packing is not attached to an upper-right round hole 31. In a case where the capacitor case 40 is housed in the round hole 31 not attached with the inverter unit packing, the gap is formed between the peripheral surface 44 of the capacitor case 40 and the edge 31a of the round hole 31 as illustrated at a lower right part.

An inverter unit packing 60 is attached to an upper-left round hole 31. The inverter unit packing 60 is annularly disposed along the edge 31a of the round hole 31 in a seamless manner. In a case where the capacitor case 40 is housed in the round hole 31 attached with the inverter unit packing 60, the gap between the peripheral surface 44 of the capacitor case 40 and the edge 31a of the round hole 31 is filled with the inverter unit packing 60 as illustrated at a lower left part. As a material of the inverter unit packing 60, a material having insulating property, heat resistance, weatherability, flame retardance, and flexibility, for example, ethylene-propylene rubber (EPDM rubber) or chloroprene rubber (CR rubber) is used.

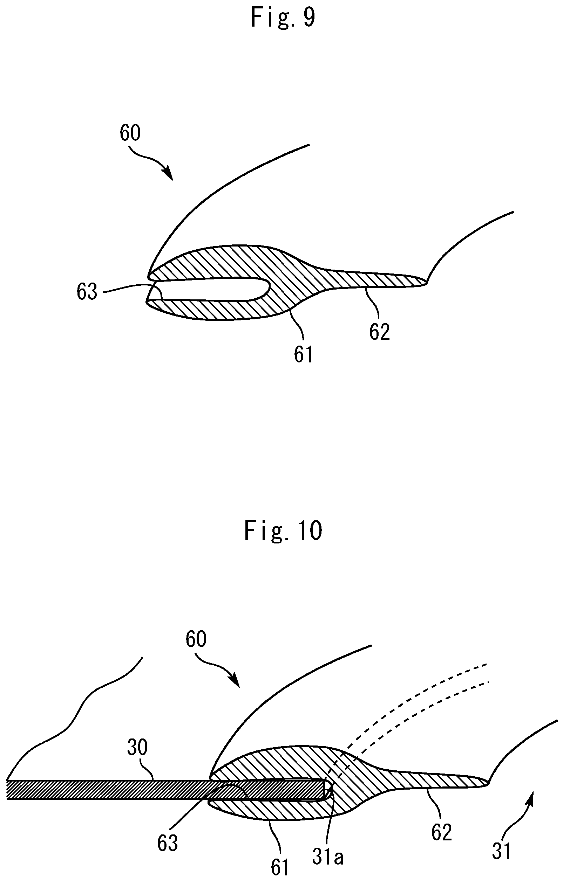

Fig. 9 is a cross-sectional view illustrating an example of a specific shape of the inverter unit packing 60. The inverter unit packing 60 includes a base 61 and a membrane 62. The base 61 is an endless belt-shaped body having an annular shape. The membrane 62 is provided inside the annular shape of the base 61. The membrane 62 and the base 61 are integrally molded. A groove 63 is provided on outside of the annular shape of the base 61. **In** the example illustrated in Fig. 9, the membrane 62 is provided to the base 61 such that the membrane 62 and the groove 63 are positioned on the same plane.

Fig. 10 is a cross-sectional view illustrating a state where the inverter unit packing 60 is attached to the round hole 31 of the partition plate 30. To attach the inverter unit packing 60 to the round hole 31, the edge 31a of the round hole 31 is inserted into the groove 63 of the base 61. The base 61 is fabricated such that a width of the groove 63 is less than a thickness of the partition plate 30. Thus, the edge 31a of the round hole 31 inserted into the groove 63 of the base 61 is sandwiched by the base 61 from a front side and a rear side. Further, the base 61 is fabricated such that the edge 31a of the round hole 31 comes into contact with a deep part of the groove 63. When the inverter unit packing 60 is attached to the round hole 31, the membrane 62 extends from the base 61 toward a center of the round hole 31.

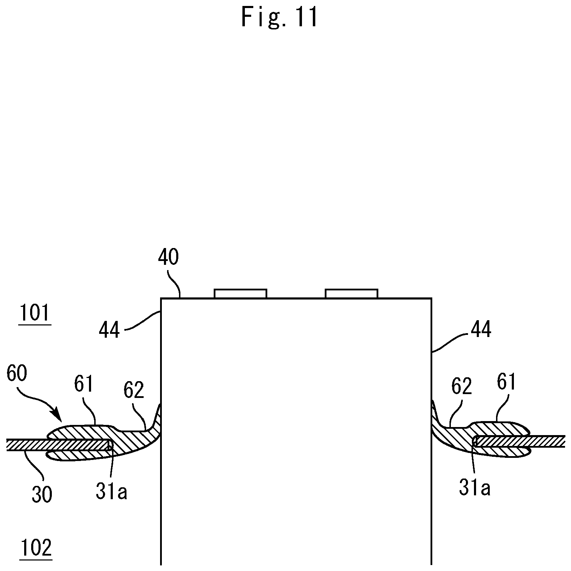

Fig. 11 is a cross-sectional view illustrating a state where the gap between the round hole 31 of the partition plate 30 and the capacitor case 40 is sealed with the inverter unit packing 60. The round hole 31 of the inverter unit packing 60 is fabricated such that an inner diameter of the membrane 62 is less than an outer diameter of the capacitor case 40. Therefore, in a case where the capacitor case 40 is inserted into the round hole 31 attached with the inverter unit packing 60, the membrane 62 extending from the base 61 toward the center of the round hole 31 adheres to the peripheral surface 44 of the capacitor case 40.

When the membrane 62 adheres to the peripheral surface 44 of the capacitor case 40 as illustrated in Fig. 11, the gap between the capacitor case 40 and the round hole 31 of the partition plate 30 is sealed. The membrane 62 has flexibility. Therefore, even in a case where the capacitor case 40 thermally expands during energization, the state where the membrane 62 adheres to the peripheral surface 44 of the capacitor case 40 is maintained. This prevents infiltration of dust from the air duct chamber 102 (outside) to the circuit chamber 101 (inside). Further, the membrane 62 is bent with thermal expansion of the capacitor case 40, which makes it possible to prevent stress from being generated on the capacitor case 40, and to suppress a risk of breakage of the capacitor case 40.

### 3. Modification

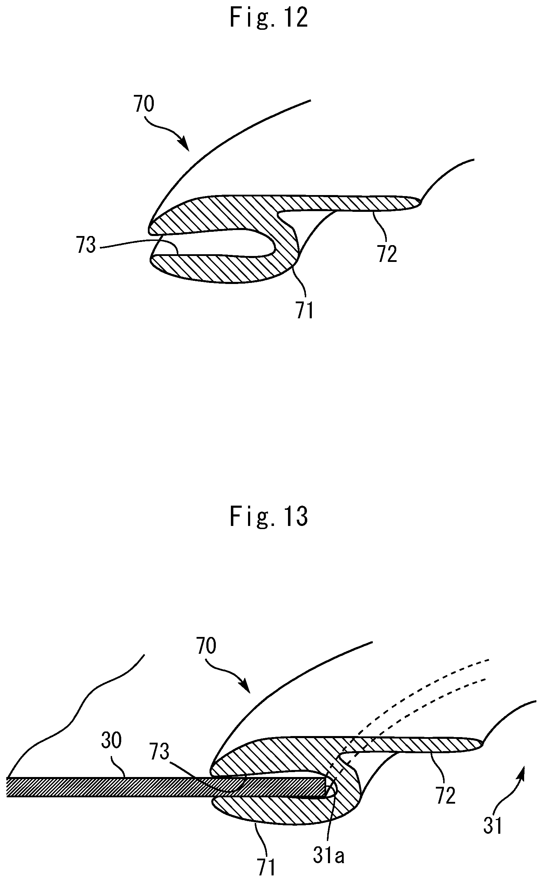

In place of the inverter unit packing 60, an inverter unit packing 70 having a shape illustrated in Fig. 12 may be used. The inverter unit packing 70 includes a base 71 and a membrane 72 that are integrally molded. In the inverter unit packing 70, an upper surface of the base 71 and an upper surface of the membrane 72 are flatly connected. In other words, the inverter unit packing 70 has a flat upper surface having no level difference. A groove 73 of the base 71 is formed on a plane offset from a plane where the membrane 72 is positioned.

Fig. 13 is a cross-sectional view illustrating a state where the inverter unit packing 70 is attached to the round hole 31 of the partition plate 30. When the edge 31a of the round hole 31 is inserted into the groove 73 of the base 71, the edge 31a of the round hole 31 is sandwiched by the base 71 from both sides. When the inverter unit packing 70 is attached to the round hole 31, the membrane 72 extends from the base 71 toward the center of the round hole 31.

The inverter unit packing used in the above-described embodiment is an endless belt-shaped body having an annular shape; however, an inverter unit packing as a belt-shape body having ends, made of a flexible material may be used. For example, an arc-shaped or linear inverter unit packing having a cross-sectional shape illustrated in Fig. 9 or a cross-sectional shape illustrated in Fig. 12 can be used. The belt-shaped body made of a flexible material can be fitted into the edge 31a of the round hole 31 by being bent along the round hole 31. Further, the belt-shaped body can be used for the round hole 31 having various sizes by appropriately cutting the ends to adjust a length.

### Reference Signs List

- 10: inverter unit
- 22: laminate busbar (stacked conductor)
- 23: switching elements
- 30: partition plate
- 31: round hole
- 31a: edge
- 40: capacitor case
- 41: stud
- 42,43: terminal
- 50: support plate
- 60,70: inverter unit packing
- 61,71: base
- 62,72: membrane
- 63,73: groove
- 101: circuit chamber
- 102: air duct chamber

## Claims

1. An inverter unit of a power conversion apparatus, the inverter unit comprising:
a capacitor housed in a capacitor case having a cylindrical shape;
a partition plate configured to partition an inside and an outside of the inverter unit, the partition plate including a round hole through which the capacitor case passes; and
a packing configured to fill a gap between an edge of the round hole of the partition plate and the capacitor case in a state of passing through the round hole, wherein
the packing includes a base having an annular shape and sandwiching the edge from a front side and a rear side when the base is attached to the round hole, and a membrane extending from the base toward a center of the round hole and adhering to a peripheral surface of the capacitor case.

2. The inverter unit according to claim 1, further comprising:
a stud provided on a bottom of the capacitor case; and
a support plate to which the stud is fixed.

3. The inverter unit according to claim 1, further comprising:
one or more switching elements; and
a stacked conductor configured to connect the one or more switching elements and a terminal of the capacitor in a same plane.

4. An inverter unit packing filling a gap between an edge of a round hole of a partition plate provided in an inverter unit and a capacitor case having a cylindrical shape in a state of passing through the round hole, the inverter unit packing comprising:
a base configured to sandwich the edge from a front side and a rear side when the base is attached to the round hole; and
a membrane integrated with the base, and configured to adhere to a peripheral surface of the capacitor case in the state of passing through the round hole when the base is attached to the round hole.

5. The inverter unit packing according to claim 4, wherein
the base is an endless belt-shaped body having an annular shape, and
the membrane is provided inside the annular shape of the base.

6. The inverter unit packing according to claim 4, wherein the base is a belt-shaped body made of a flexible material.
